# EUROPEAN PATENT SPECIFICATION

(11) **EP 2 088 068 B1**
(45) Date of publication and mention of the grant of the patent: **12.09.2012**
(21) Application number: 09250268.1
(22) Date of filing: 02.02.2009
(51) Int. Cl.: B62K 11/06, B62K 19/30

(54) **Motorcycle**
Motorrad
Motocyclette

(30) Priority: 05.02.2008 JP 2008025090
(43) Date of publication of application: 12.08.2009
(73) Proprietor: Yamaha Hatsudoki Kabushiki Kaisha, Shizuoka-ken Shizuoka 438-8501 (JP)
(72) Inventor: Onodera, Satoru, Shizuoka-ken 438-8501 (JP)
(74) Representative: Schoppe, Fritz

(56) References cited:
- EP-A- 1 529 724
- JP-A- 2001 206 269
- JP-U- 5 034 092
- US-A1- 2005 211 488

## Description

### Technical Field

The present invention relates to a motorcycle.

### Background Art

For example, JP-A-2000-238674 discloses a battery arrangement in a motor-assisted bicycle. In the motor-assisted bicycle disclosed in JP-A-2000-238674, a battery is housed in a hollow body frame.

As described in JP-A-2000-238674, a dead space in the hollow frame can be effectively utilized by disposing the battery therein.

However, when the battery is disposed in the hollow frame, an opening in the hollow frame is required for attachment and detachment of the battery. In fact, in the motor-assisted bicycle disclosed in JP-A-2000-238674, the opening is formed in the hollow frame for attachment and detachment of the battery.

The rigidity required for the body frame is low in the motor-assisted bicycle such as one disclosed in JP-A-2000-238674, for example. Thus, the fabrication of the opening in the hollow frame does not cause a problem in the motor-assisted bicycle. On the contrary, the rigidity required for the body frame is higher in a motorcycle than in the motor-assisted bicycle. Accordingly, it becomes difficult to secure the rigidity of the body frame if the opening is formed in the body frame of the motorcycle. In a case where the opening is formed in the hollow frame, in order to secure the rigidity of the body frame, it is necessary to take a measure to improve the rigidity thereof such as thickening of the hollow frame. However, thickening of the hollow frame tends to increase the weight of the body frame. Consequently, it undesirably increases the weight of the motorcycle.

The present invention has been made in view of the foregoing problems, and therefore has an object to provide a small, lightweight motorcycle with a high rigidity.

JP5034092 describes a motorcycle according to the preamble of claim 1, comprising a body frame in which an integral hollow part of the frame is adapted to be usable as a housing for receiving a battery.

US2005/211488 describes apparatus for affixing batteries to a motorcycle for the production of electricity, which includes a battery or plurality of batteries sized to fit within the frame of a motorcycle; a motorcycle frame of sufficient size or diameter to fit and contain the batteries; and apparatus for connecting the batteries to the electrical connection, bus or battery system of the motorcycle.

### Summary

A motorcycle according to the present invention includes a driving source (such as an engine), a body frame, a pipe, and a power source for the driving source. The driving source is attached to the body frame. The pipe is attached to the body frame. The pipe has at least one open end. The power source is housed in the pipe. A cushion member is disposed between an outer periphery of the power source and an inner periphery of the pipe.

According to the present invention, it is possible to provide a small, lightweight motorcycle with a high rigidity.

### Brief Description of the Drawings

Embodiments of the invention are described below, by way of example only, with reference to the drawings.
FIG. 1 is a left side view of a motorcycle according to an embodiment.
FIG. 2 is a left side view of a body frame.
FIG. 3 is a plan view of the body frame.
FIG. 4 is a sectional view of a second engine suspension shaft.
FIG. 5 is a sectional view taken along the line V-V in FIG. 4.
FIG. 6 is a sectional view of a pivot shaft in variation 1.
FIG. 7 is a sectional view of a steering shaft in variation 2.

### Detailed Description

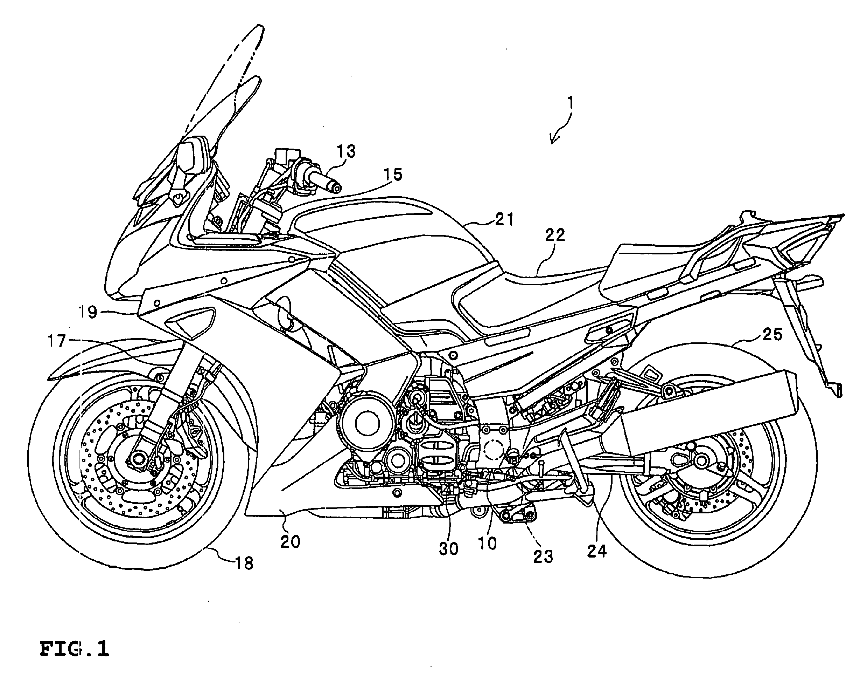

A preferred embodiment of the present invention will hereinafter be described in detail, using a motorcycle 1 shown in FIG. 1. It should be noted however that the following embodiment is merely an example. The present invention is not limited to the following embodiment and variations.

Forward, rear, left, and right directions in the following descriptions denote directions as viewed from a rider seated on a seat 22.

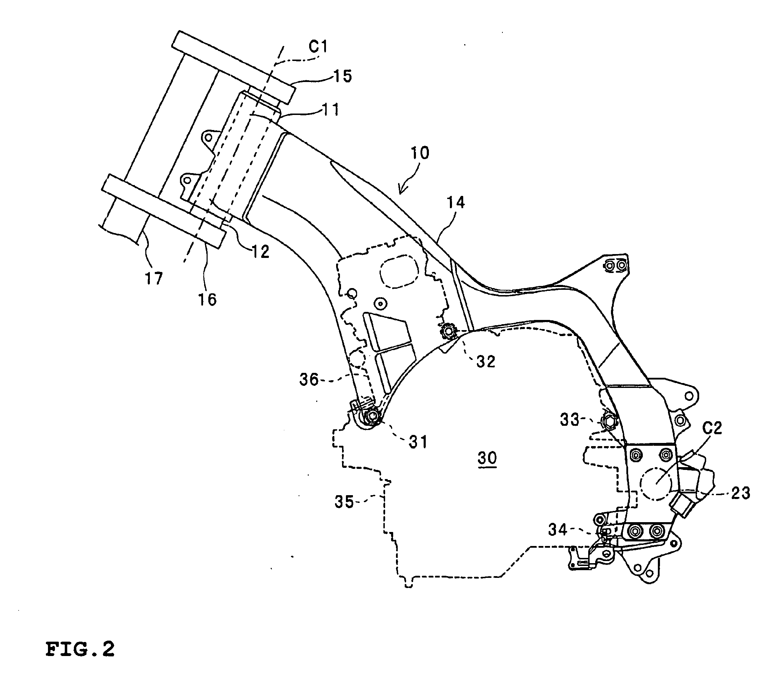

As shown in FIG. 1, the motorcycle 1 includes a body frame 10. As shown in FIG. 2, the body frame 10 includes a main frame 14 and a steering head pipe 11. The steering head pipe 11 is connected to a front end of the main frame 14. Here, the steering head pipe 11 may be integrally formed with the main frame 14. A steering shaft 12 is rotatably inserted in the steering head pipe 11. The steering shaft 12 is connected to a handlebar crown 15 at its upper end. As shown in FIG. 1, handlebars 13 are attached to the handlebar crown 15.

As shown in FIG. 2, an under bracket 16 is attached to a lower end of the steering shaft 12. A pair of front forks 17 is attached to the handlebar crown 15 and the under bracket 16. As shown in FIG. 1, a front wheel 18 is rotatably attached to lower ends of the paired front forks 17.

A front cowl 19 is attached to the body frame 10 so as to cover the front side of the body frame 10. Side cowls 20 are also attached to the body frame 10 so as to cover the lateral sides of the body frame 10. A fuel tank 21 is mounted on the body frame 10. The seat 22 is disposed behind the fuel tank 21.

A pivot shaft 23 is attached to the rear end of the body frame 10. The pivot shaft 23 extends in a vehicle width direction. A rear arm 24 is swingably (or pivotably) attached to the pivot shaft 23. A rear wheel 25 is rotatably attached to the rear end of the rear arm 24.

As shown in FIGs. 1 and 2, an engine 30 which operates as a driving source is suspended from the body frame 10. More specifically, first to fourth engine suspension shafts 31 to 34 are attached to the body frame 10. The engine 30 is mounted to the body frame 10 by the first to the fourth engine suspension shafts 31 to 34.

The first to the fourth engine suspension shafts 31 to 34 extend in the vehicle width direction. As shown in FIG. 2, the first engine suspension shaft 31 is secured to a crankcase 35 in a position forward of a cylinder block 36. The second engine suspension shaft 32 is secured to the upper portion of the crankcase 35 in a position behind the cylinder block 36. The third and the fourth engine suspension shafts 33, 34 are secured to the rear portion of the crankcase 35. Each of the first to the fourth engine suspension shafts 31 to 34 is constituted by a pipe with at least one open end. Openings at the end of each of the first to the fourth engine suspension shafts 31 to 34 are closed by, for example, bolts.

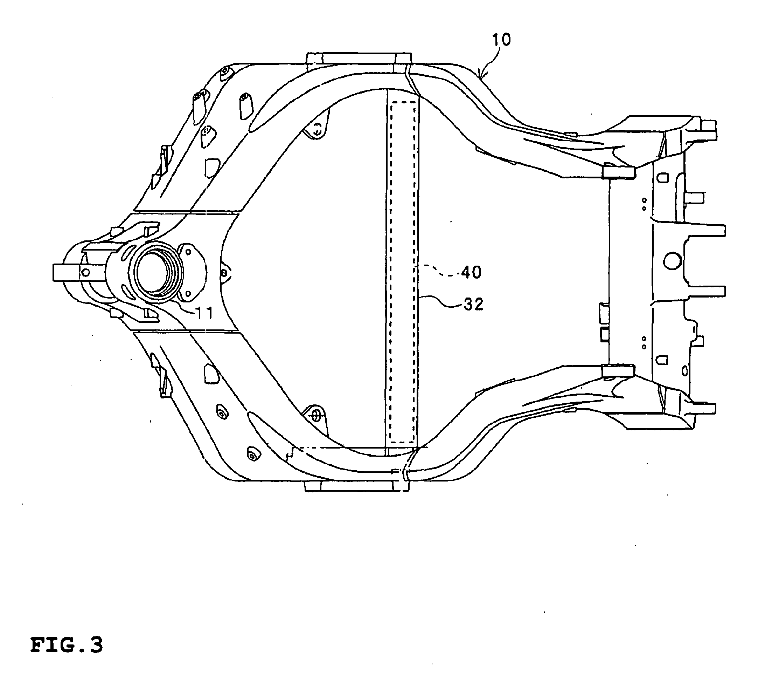

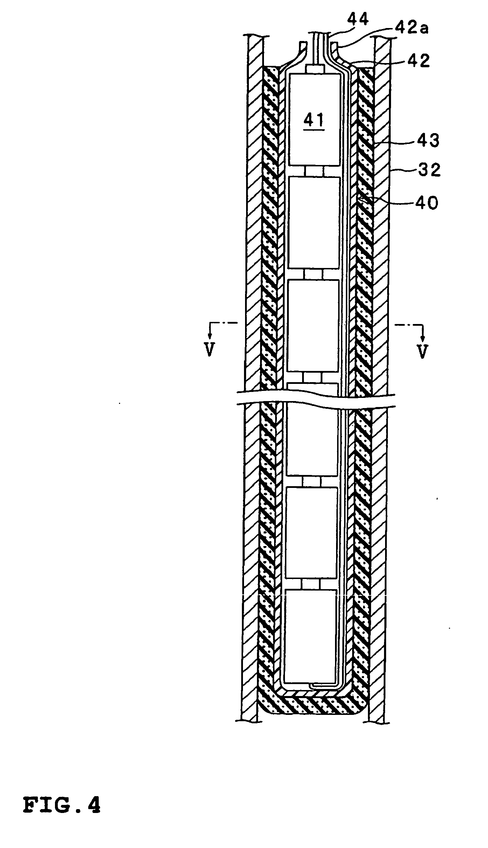

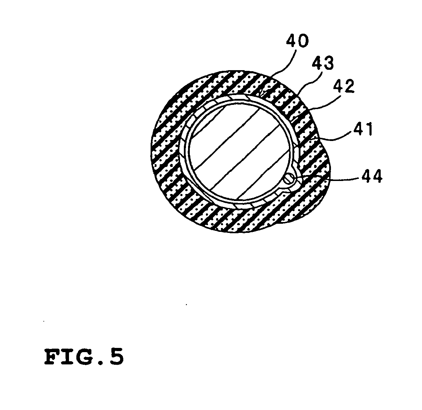

As shown in FIG. 3, in this embodiment, a battery assembly 40 which operates as a power source for the engine 30 is housed in the second engine suspension shaft 32. As shown in FIGs. 4 and 5, the battery assembly 40 includes a plurality of batteries 41. Each of the batteries 41 is generally in a cylindrical shape. The plurality of batteries 41 is aligned in a vehicle height direction. The plurality of batteries 41 is covered with a plastic package 42. In this way, the batteries 41 are integrated with one another. Here, wiring 44 connected to the plurality of batteries 41 are drawn to the outside from an opening 42a of the package 42.

The battery assembly 40 is inserted in the second engine suspension shaft 32 while being housed in a cylindrical cushion member 43 with one end closed. In other words, the cushion member 43 is disposed between an outer periphery of the battery assembly 40 and an inner periphery of the second engine suspension shaft 32.

For instance, when a part of the body frame 10 is made hollow, and a battery is housed in the body frame 10, it is necessary to form an opening in the body frame 10 for removal of the battery as described in, for example JP-A-2000-238674. For this reason, the rigidity of the body frame 10 tends to decrease. Therefore, it is necessary to, for example, thicken the body frame 10 in order to secure the rigidity of the body frame 10. Accordingly, the weight of the body frame 10, and consequently, the weight of the motorcycle 1 tend to increase.

On the contrary, in this embodiment, the battery assembly 40 is disposed in the cylindrically-shaped second engine suspension shaft 32, which is attached to the body frame 10. For this reason, there is no need to form an opening or an internal space in the body frame 10. Accordingly, there is no possible decrease in rigidity of the body frame 10. Therefore, there is no need to thicken the body frame 10.

In addition, the battery assembly 40 is disposed in a dead space inside the second engine suspension shaft 32. This effectively utilizes the dead space inside the second engine suspension shaft 32. Therefore, in the motorcycle 1 where mounting space can be limited, the use efficiency of the mounting space can be improved.

Accordingly, it is possible to reduce the weight of the motorcycle 1 while retaining the rigidity thereof. Also, it is possible to reduce the overall sizes of components attached to the body frame 10. As a result, it is possible to secure minimum ground clearance of the motorcycle 1 and to shorten the longitudinal length of the motorcycle 1. In addition, due to the enough capacity of the mounting space, the components attached to the body frame 10 can be enlarged. For example, the enlargement of an air cleaner makes it possible to reduce the air supply noise and to improve the air supply efficiency.

If the battery assembly 40 is housed in the second engine suspension shaft 32, the battery assembly 40 can easily be removed by unscrewing the bolts and the like that close both ends of the second engine suspension shaft 32.

As shown in FIG. 2, in this embodiment, the second engine suspension shaft 32 in which the battery assembly 40 is housed is placed between an axis C1 of the steering head pipe 11 and an axis C2 of the pivot shaft 23 in a side view. Due to the above constitution, it is possible to dispose the battery assembly 40 proximate the engine 30, which is a heavy object. Therefore, the components having large masses can be concentrated (i.e. located close together) in the motorcycle 1. Consequently, the maneuverability of the motorcycle 1 can further be improved.

Of the pipe members placed between the axis C1 of the steering head pipe 11 and the axis C2 of the pivot shaft 23, the engine suspension shafts 31 to 34 are especially placed in the proximity of the engine 30. Accordingly, as in this embodiment, it is possible to further concentrate (i.e. to locate close together) the mass of the motorcycle 1 by mounting the battery assembly 40 in the engine suspension shafts 31 to 34.

For example, it is conceivable that axles for fixing the front wheel 18 and the rear wheel 25 are formed in pipe shapes and that the battery assembly 40 is housed in the axles. However, a so-called unsprung load increases in this case. On the other hand, as in this embodiment, when the battery assembly 40 is housed in the second engine suspension shaft 32 attached to the body frame 10, the so-called unsprung load does not increase.

For example, it is conceivable that the battery assembly 40 is housed in a pipe that extends in a longitudinal direction. However, the weight of the battery assembly 40 is dispersed in the front and rear in this case. Therefore, it is difficult to concentrate the mass of the motorcycle 1.

On the other hand, as shown in FIG. 3, the second engine suspension shaft 32 that houses the battery assembly 40 extends generally in the vehicle width direction. Due to the above constitution, the weight of the battery assembly 40 can be concentrated (or,in other words, kept close together) in the longitudinal direction. Therefore, it is possible to effectively concentrate the mass of the motorcycle 1.

In this embodiment, as shown in FIG. 3, the second engine suspension shaft 32 in which the battery assembly 40 is housed is formed in a linear shape. This can facilitate the attachment and detachment of the battery assembly 40.

In this embodiment, as shown in FIGs. 4 and 5, the batteries 41 are integrated by the package 42. Thus, the attachment and detachment of the batteries 41 can be facilitated. In addition, the vibration or swing of the batteries 41 can be suppressed. Therefore, it is possible to suppress collision of the plural batteries 41 with each other.

Furthermore, in this embodiment, the battery assembly 40 is inserted in the second engine suspension shaft 32 in a state where the battery assembly 40 is housed in the cushion member 43. Therefore, it is possible to suppress collision of the battery assembly 40 with the second engine suspension shaft 32. In addition, the battery assembly 40 can reliably be retained in the second engine suspension shaft 32.

The above embodiment described an example that the battery assembly 40 was housed in the second engine suspension shaft 32. However, the present invention is not limited to this specific construction. For example, the battery assembly 40 may be disposed in the first engine suspension shaft 31, the third engine suspension shaft 33, or the fourth engine suspension shaft 34. Furthermore, the battery assembly 40 may be disposed in at least two or more of the first to the fourth engine suspension shafts 31 to 34. As described above, by housing the battery assembly 40 in the plurality of engine suspension shafts, the number of the batteries 41 which can be mounted in the motorcycle 1 can be increased. Therefore, it is possible to increase the capacity of the power source mounted in the motorcycle 1.

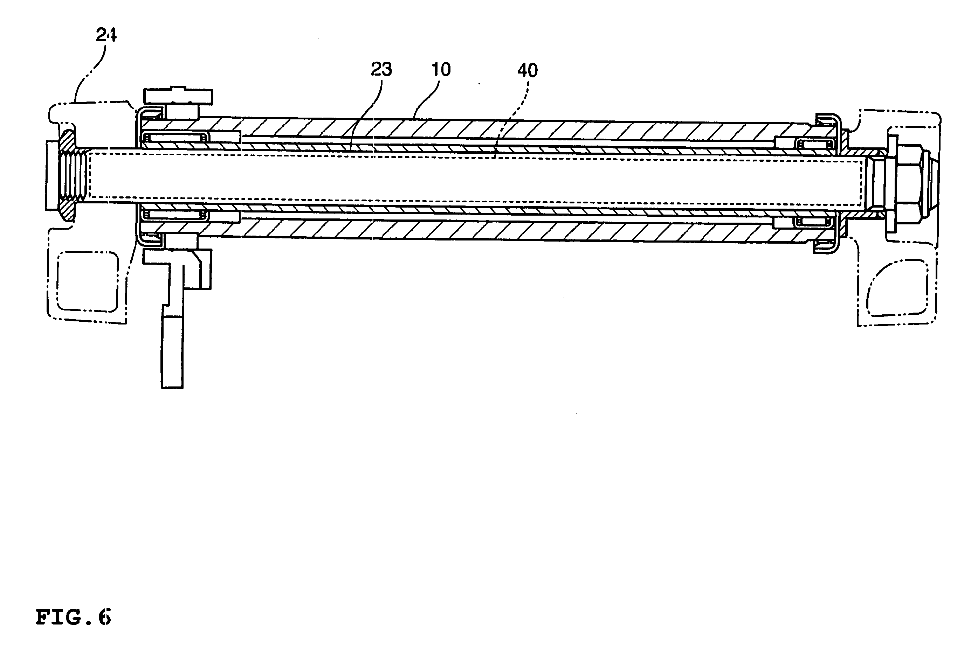

The battery assembly 40 may be housed in a pipe other than the engine suspension shafts 31 to 34. For example, as shown in FIG. 6, the battery assembly 40 may be housed in the pivot shaft 23. In this case, the dead space formed in the motorcycle 1 can also be used effectively. In addition, as similar to the engine suspension shafts 31 to 34, the pivot shaft 23 is in the proximity of the engine 30 and extends generally in the vehicle width direction. Therefore, by housing the battery assembly 40 in the pivot shaft 23, the mass of the motorcycle 1 can further be concentrated.

Moreover, the pivot shaft 23 is disposed in a relatively low position. Thus, by disposing the battery assembly 40 in the pivot shaft 23, the center of mass of the motorcycle 1 can be lowered.

Due to a demand for further improvement in rigidity of motorcycles in recent years, the pivot shaft 23 tends to be thickened. For the above reason, high rigidity is demanded in this variation where the dead space in the pivot shaft 23 can be effectively utilized, and this variation is especially effective for a motorcycle having the thick pivot shaft 23.

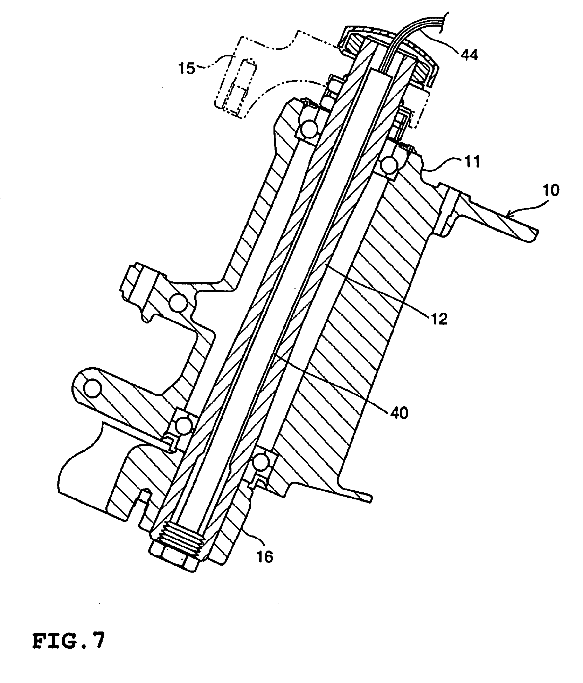

As shown in FIG. 7, the battery assembly 40 may be housed in the steering shaft 12. In this case, the dead space of the motorcycle 1 can also be used effectively without decreasing the rigidity of the body frame 10.

In addition, it is possible to increase the sharing load of (or, in other words, the proportion of the load on) the front wheel by disposing the battery assembly 40 in the steering shaft 12. Therefore, the dynamic performance of the motorcycle 1 can further be improved. More specifically, it is possible to improve steering capability as well as linear mobility of the motorcycle 1.

For example, it is conceivable that the power source is disposed in the front forks 17. Also, in this case, the sharing load of the front wheel can be increased. However, if the battery assembly 40 is housed in the front forks 17, the battery assembly 40 as a heavy object is disposed away from the steering shaft 12. This tends to increase the moment of inertia of the steering shaft 12 about its axis. Therefore, the maneuverability of the motorcycle 1 tends to decrease. On the contrary, as in this variation, if the battery assembly 40 is housed in the steering shaft 12, the moment of inertia of the steering shaft 12 about its axis does not increase to a considerable degree. Therefore, the high maneuverability of the motorcycle 1 can be achieved.

Furthermore, the steering shaft 12 is disposed in a position relatively away from the engine 30. Thus, it is possible to dispose the battery assembly 40 away from the engine 30 that reaches a relatively high temperature. As a result, it is possible to prevent rise in temperature of the battery assembly 40 by heat of the engine 30.

Moreover, in recent years, with a demand for improved rigidity of the motorcycle 1, the steering shaft 12 tends to be thickened. For the above reason, the dead space in the steering shaft 12 tends to increase. By housing the battery assembly 40 in the steering shaft 12, the dead space in the thickened steering shaft 12 can be effectively utilized.

The motorcycle according to the present invention may be a motorcycle of an off-road type, a scooter, or a moped, for example.

The above embodiment described an example that the battery assembly 40 including the batteries 41 was used as a power source.

The above embodiment described an example that the engine 30 was used as a driving source. However, the present invention does not limit the driving source to the engine. For example, the driving source may be an electric motor.

The above embodiment described an example that the plural batteries 41 are integrated by means of a package.

### Description of Reference Numerals 1: motorcycle

10: body frame
11: steering head pipe
12: steering shaft (pipe)
23: pivot shaft (pipe)
24: rear arm
30: engine (drive source)
31: first engine suspension shaft
32: second engine suspension shaft (pipe)
33: third engine suspension shaft
34: fourth engine suspension shaft
40: battery assembly (power source)
41: battery
42: package
43: cushion member

## Claims

1. A motorcycle comprising:
a driving source (30);
a body frame (10) to which the driving source (30) is attached;
a pipe (12; 23; 31-34) attached to the body frame (10) and having at least one open end; and
a battery assembly (41) for the driving source (30), the battery assembly (41) being housed in the pipe (12; 23; 31-34),
**characterized by**
a cushion member (43) disposed between an outer periphery of the battery assembly (41) and an inner periphery of the pipe (12; 23; 31-34),
wherein the battery assembly comprises a plurality of cylindrically-shaped batteries (41) aligned linearly, and a package (42) for integrating the plurality of batteries (41).

2. The motorcycle according to Claim 1, wherein
the body frame (10) includes a steering head pipe (11) and further includes a pivot shaft (23) that is attached to the body frame (10) so as to extend in a vehicle width direction behind the steering head pipe (11) and that pivotably supports a rear arm (24), and
the pipe (31-34) is disposed between an axis (C1) of the steering head pipe (11) and an axis of the pivot shaft (23).

3. The motorcycle according to Claim 1 or 2, wherein
the pipe (12; 23; 31-34) extends generally in the vehicle width direction.

4. The motorcycle according to Claim 1, 2 or 3, wherein
the pipe (31-34) is attached to the driving source (30) and the body frame (10).

5. The motorcycle according to Claim 1, wherein
the pipe is a pivot shaft (23) that is attached to the body frame (10), that pivotably supports a rear arm (24), and that extends in a vehicle width direction.

6. The motorcycle according to Claim 1, wherein
the body frame (10) includes a steering head pipe (11), and
the pipe is a steering shaft (12) rotatably inserted in the steering head pipe (11).

7. The motorcycle according to any one of the preceding Claims, wherein
the pipe (12; 23; 31-34) has a linear shape.

## Patentansprüche

1. Ein Motorrad, das folgende Merkmale aufweist:
eine Antriebsquelle (30);
einen Körperrahmen (10), an dem die Antriebsquelle (30) befestigt ist;
ein Rohr (12; 23; 31-34), das an dem Körperrahmen (10) befestigt ist und zumindest ein offenes Ende aufweist; und
eine Batterieanordnung (41) für die Antriebsquelle (30), wobei die Batterieanordnung (41) in dem Rohr (12; 23; 31-34) untergebracht ist,
**gekennzeichnet durch**
ein Pufferbauglied (43), das zwischen einem äußeren Umfang der Batterieanordnung (41) und einem inneren Umfang des Rohrs (12; 23; 31-34) angeordnet ist,
wobei die Batterieanordnung eine Mehrzahl von zylindrisch geformten Batterien (41) aufweist, die linear ausgerichtet sind, und ein Gehäuse (42) zum Integrieren der Mehrzahl von Batterien (41).

2. Motorrad gemäß Anspruch 1, bei dem
der Körperrahmen (10) ein Lenkkopfrohr (11) umfasst und ferner eine Schwenkwelle (23) umfasst, die an dem Körperrahmen (10) befestigt ist, um sich in einer Fahrzeugbreiterichtung hinter dem Lenkkopfrohr (11) zu erstrecken, und die einen hinteren Arm (24) schwenkbar trägt, und
das Rohr (31-34) zwischen einer Achse (C1) des Lenkkopfrohrs (11) und einer Achse der Schenkwelle (23) angeordnet ist.

3. Motorrad gemäß Anspruch 1 oder 2, bei dem
das Rohr (12; 23; 31-34) sich allgemein in der Fahrzeugbreiterichtung erstreckt.

4. Motorrad gemäß Anspruch 1, 2 oder 3, bei dem das Rohr (31-34) an der Antriebsquelle (30) und dem Körperrahmen (10) befestigt ist.

5. Motorrad gemäß Anspruch 1, bei dem
das Rohr eine Schwenkwelle (23) ist, die an einem Körperrahmen (10) befestigt ist, die einen hinteren Arm (24) schwenkbar trägt, und die sich in einer Fahrzeugbreiterichtung erstreckt.

6. Motorrad gemäß Anspruch 1, bei dem
der Körperrahmen (10) ein Lenkkopfrohr (11) aufweist, und
das Rohr eine Lenkwelle (12) ist, die drehbar in das Lenkkopfrohr (11) eingefügt ist.

7. Motorrad gemäß einem der vorhergehenden Ansprüche, bei dem
das Rohr (12; 23; 31-34) eine lineare Form aufweist.

## Revendications

1. Motocyclette comprenant :
une source d'entraînement (30);
un châssis de corps (10) auquel est fixée la source d'entraînement (30);
un tuyau (12; 23; 31 à 34) fixé au châssis de corps (10) et présentant au moins une extrémité ouverte; et
un ensemble de batterie (41) pour la source d'entraînement (30), l'ensemble de batterie (41) étant logé dans le tuyau (12; 23; 31 à 34),
**caractérisée par**
un élément de coussin (43) disposé entre une périphérie extérieure de l'ensemble de batterie (41) et une périphérie intérieure du tuyau (12; 23; 31 à 34),
dans laquelle l'ensemble de batterie comprend une pluralité de batteries de forme cylindrique (41) alignées linéairement, et une enveloppe (42) destinée à intégrer la pluralité de batteries (41).

2. Motocyclette selon la revendication 1, dans laquelle
le châssis de corps (10) comporte un tuyau principal de guidage (11) et comporte par ailleurs un arbre pivot (23) qui est fixé au châssis de corps (10) de manière à s'étendre dans une direction de la largeur du véhicule derrière le tuyau principal de guidage (11) et qui supporte de manière pivotante un bras arrière (24), et
le tuyau (31 à 34) est disposé entre un axe (C1) du tuyau principal de guidage (11) et un axe de l'arbre pivot (23).

3. Motocyclette selon la revendication 1 ou 2, dans laquelle
le tuyau (12; 23; 31 à 34) s'étend généralement dans la direction de la largeur du véhicule.

4. Motocyclette selon la revendication 1, 2 ou 3, dans laquelle
le tuyau (31 à 34) est fixé à la source d'entraînement (30) et au châssis de corps (10).

5. Motocyclette selon la revendication 1, dans laquelle
le tuyau est un arbre pivot (23) qui est fixé au châssis de corps (10), qui supporte de manière pivotante un bras arrière (24) et qui s'étend dans une direction de la largeur du véhicule.

6. Motocyclette selon la revendication 1, dans laquelle
le châssis de corps (10) comporte un tuyau principal de guidage (11), et
le tuyau est un arbre de guidage (12) inséré de manière rotative dans le tuyau principal de guidage (11).

7. Motocyclette selon l'une quelconque des revendications précédentes, dans laquelle
le tuyau (12; 23; 31 à 34) a une forme linéaire.
